# EUROPÄISCHE PATENTSCHRIFT

(11) **EP 0 371 305 B1**
(45) Veröffentlichungstag und Bekanntmachung des Hinweises auf die Patenterteilung: **22.09.1993**
(21) Anmeldenummer: 89120966.0
(22) Anmeldetag: 11.11.1989
(51) Int. Cl.: F16C 3/18, F16C 3/22

(54) **Exzenterwelle mit Gegengewicht**
Excentric shaft with a counter weight
Arbre excentré à contrepoids

(30) Priorität: 30.11.1988 CH 4440/88
(43) Veröffentlichungstag der Anmeldung: 06.06.1990
(73) Patentinhaber: AGINFOR AG für industrielle Forschung, CH-5430 Wettingen (CH)
(72) Erfinder: Kolb, Roland, CH-8157 Dielsdorf (CH)
(74) Vertreter: Klein, Ernest

(56) Entgegenhaltungen:
- EP-A- 0 052 461
- FR-A- 1 533 301
- GB-A- 945 555
- US-A- 2 325 804

## Beschreibung

Die Erfindung betrifft eine Exzenterwelle mit mindestens einem Gegengewicht, welches als separates Teil auf der Welle angeordnet ist, wobei der Sitz für das Gegengewicht auf der Welle einen durch zwei Kreisbögen begrenzten zitronenförmigen Querschnitt aufweist, und wobei der eine, dem Exzenter diametral gegenüberliegende Kreisbogen sein Zentrum auf der Exzenterachse hat, während der andere Kreisbogen sein Zentrum auf der Rotationsachse der Welle hat,

Die Erfindung betrifft ebenfalls die Verwendung einer derartigen Exzenterwelle als Antriebswelle einer Verdrängermaschine der Spiralbauart.

### Stand der Technik

Eine Exzenterwelle der eingangs genannten Art ist bekannt aus der FR-A-1 533 301. Beim dortigen Gegenstand ist zum einen der Querschnitt der Zitrone beträchtlich kleiner als jener der Welle, und zum andern wird dieser an sich bereits kleine Querschnitt noch durch die Kerbwirkung eines Stiftes beeinträchtigt. Geht man davon aus, dass die Zitrone den minimal erforderlichen Querschnitt des drehenden Systemes aufweisen muss, so muss offensichtlich die Welle selbst überdimensioniert sein. Die Form der Ausparung des Gegengewichtes kann zudem nicht jener des Sitzes entsprechen, da der Sitz einen kleineren Querschnitt als die Welle aufweist, andererseits das Gegengewicht jedoch über die Welle aufgeschoben werden muss. Dies führt dann zwangsläufig zur Anwendung von separaten Befestigungsmitteln und Distanzmitteln.

Verdrängermaschinen der Spiralbauart mit einer derartigen Exzenterwelle sind beispielsweise aus der DE-A-3 313 000 bekannt. Ein nach diesem Prinzip aufgebauter Verdichter zeichnet sich durch eine nahezu pulsationsfreie Förderung des beispielsweise aus Luft oder einem Luft-Kraftstoff-Gemisch bestehenden gasförmigen Arbeitsmittels aus und könnte daher unter anderem auch für Aufladezwecke von Brennkraftmaschinen mit Vorteil herangezogen werden. Während des Betriebes eines solchen Kompressors werden entlang der Verdrängerkammer zwischen dem spiralförmig ausgebildeten Verdrängerkörper und den beiden Umfangswänden der Verdrängerkammer mehrere, etwa sichelförmige Arbeitsräume eingeschlossen, die sich von dem Einlass durch die Verdrängerkammer hindurch zum Auslass hin bewegen, wobei ihr Volumen ständig verringert und der Druck des Arbeitsmittels dementsprechend erhöht wird.

Bei dieser bekannten Maschine sind zwei mit Abstand voneinander angeordnete Exzenteranordnungen vorgesehen, von denen eine über eine Antriebswelle antreibbar ist. Dadurch ergibt sich eine statisch bestimmte Lagerung, die zudem bis auf die oberen und unteren Totpunkte der Läuferstellung eine zwangsweise Führung des Läufers sicherstellt. Um nun auch in den Totpunktlagen des Läufers eine eindeutige Führung des Läufers zu erreichen, ist eine in dem Gehäuse gelagerte Führungswelle der zweiten Exzenteranordnung mit der Antriebswelle über ein Getriebe zwangsschlüssig verbunden, wobei das Getriebe beispielsweise durch einen Zahnriemenantrieb gebildet ist.

Die den Läufer antreibende Hauptwelle ist zentral angeordnet und trägt zwei Gegengewichte, die symmetrisch zur Mitte des Exzenterlagers auf der Welle aufgezogen sind. Die Winkellage solcher Gegengewichte wird üblicherweise durch einen Keil realisiert. Dabei stellt die Bestimmung der Keilbahnlage bezüglich der Lage des Exzenters in der Fertigung ein nicht unerhebliches Problem dar. Eine sehr exakte Winkellage der Keilbahn ist nämlich Voraussetzung für einen unwuchtfreien Lauf des Laders.

### Darstellung der Erfindung

Ausgehend von der Erkenntnis, dass eine eindeutige Winkellage am besten dadurch erzielt wird, wenn der Sitz für das Gegengewicht in der gleichen Aufspannung mit der Wellen- und Exzenterbearbeitung gefertigt wird, liegt der Erfindung die Aufgabe zugrunde, die Geometrie der Aufnahme des Gegengewichts hinsichtlich einer Kostenoptimierung zu vereinfachen.

Diese Aufgabe wird durch die im Kennzeichen des Patentanspruchs 1 gegebene Lehre gelöst.

Der Vorteil der Erfindung ist insbesondere in der erzielbaren Genauigkeit der Winkellage zu sehen, die der Bearbeitungsgenauigkeit der Werkzeugmaschine entspricht, ob es sich um einen spanabhebenden Drehvorgang oder einen Schleifvorgang handelt. Dabei wird dieser Vorteil ohne Zusatzaufwand erreicht, da die Fläche mit dem jeweiligen Kreisbogen im gleichen Arbeitsgang mit dem entsprechenden Gegenstück, d.h. Welle resp. Exzenter, behandelt wird.

### Kurze Beschreibung der Zeichnung

In der Zeichnung sind mehrere Ausführungsbeispiele der Erfindung schematisch dargestellt.
Es zeigt:
- Fig. 1: eine perspektivische Ansicht einer unbestückten Exzenterwelle;
- Fig. 2: eine Stirnansicht einer mit Gegengewicht bestückten Exzenterwelle;
- Fig. 3: einen Längsschnitt durch eine Verdrängermaschine mit eingebauter Exzenterwelle
In den verschiedenen Figuren sind die jeweils gleichen Teile mit denselben Bezugszeichen versehen.

### Weg zur Ausführung der Erfindung

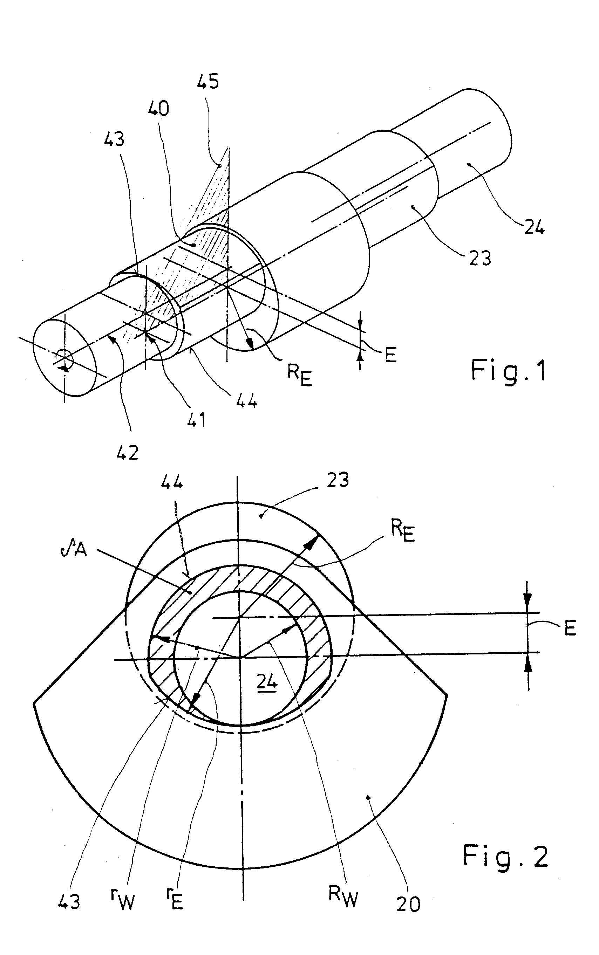

Gemäss Fig.1 ist mit 24 eine Welle bezeichnet, welche mit einer Exzenterscheibe 23 versehen ist. Beidseitig dieses Exzenters mit dem Radius R_{E}, dessen Achse 41 gegenüber der Rotationsachse 42 der Welle um die Exzentrizität E versetzt ist, sind die Sitzflächen 40 für die nichtdargestellten Gegengewichte angebracht. Bei diesen Sitzflächen handelt es sich um Kreisbogenflächen 43, 44, die in der gleichen Aufspannung bearbeitet sind wie ihre jeweiligen Gegenstücke, d.h. die Kreisbogenfläche 43 ist zusammen mit der Exzenterscheibe 23 und die Kreisbogenfläche 44 ist zusammen mit der Welle 24 gefertigt.

Hierzu ist es erforderlich - wie dies besser in der Ansicht nach Fig.2 ersichtlich ist -, dass der dem Exzenter 23 diametral gegenüberliegende Kreisbogen 43 sein Zentrum auf der Exzenterachse 41 hat, und dass der Kreisbogen 44 sein Zentrum auf der Rotationsachse 42 der Welle 24 hat. Der durch die zwei Kreisbögen 43 und 44 begrenzte Querschnitt des Sitzes hat demnach eine asymmetrische Zitronenform, die zwangsläufig um die schraffierte Fläche δA grösser bemessen ist als der kreisrunde Querschnitt der Welle. Dies führt zu einer erhöhten Stabilität der Welle gegen Durchbiegung, was von Vorteil ist zusätzlich zur Tatsache, dass infolge des Fortlassens von Keilbahnen auch keine negativen Kerbeinflüsse vorhanden sind. Die Grösse dieser Fläche δA ist selbstverständlich abhängig von den Radien der Kreisbögen.

In Abweichung zu der in Fig.1 gezeigten Variante, bei welcher der Kreisbogen 43 gegenüber der Welle 24 etwas erhaben ist, sieht die Variante nach Fig.2 vor, dass der dem Exzenter 23 diametral gegenüberliegende Kreisbogen 43 einen Radius r_{E} aufweist, der sich aus dem Radius R_{W} der Welle und der Exzentrizität E des Exzenters zusammensetzt. Am radial tiefsten Punkt ist demnach die Kreisbogenfläche 43 mit der Wellenoberfläche bündig. Mit der Wahl des Radius r_{W}, der in jedem Fall grösser sein muss als der Wellenradius R_{W}, hat man nunmehr ein Mittel in der Hand, die Grösse der Fläche δA zu bestimmen.

Das oder die Gegengewichte 20, welche mit einer entsprechend zitonenförmigen Aussparung versehen sind, können nun einfach auf den Sitz 40 aufgepresst werden. Bei diesen Ausgleichsmassen kann es sich beispielsweise um gesinterte Teile handeln oder aber um Stanzteile geringerer Dicke, von denen mehrere nebeneinanderliegend das Gegengewicht bilden. In diesem Fall können die dem Exzenter am nächsten liegenden Teile mit einfachem Schiebesitz versehen sein und nur das dem Exzenter abgekehrte Teil muss auf die Welle aufgepresst werden.

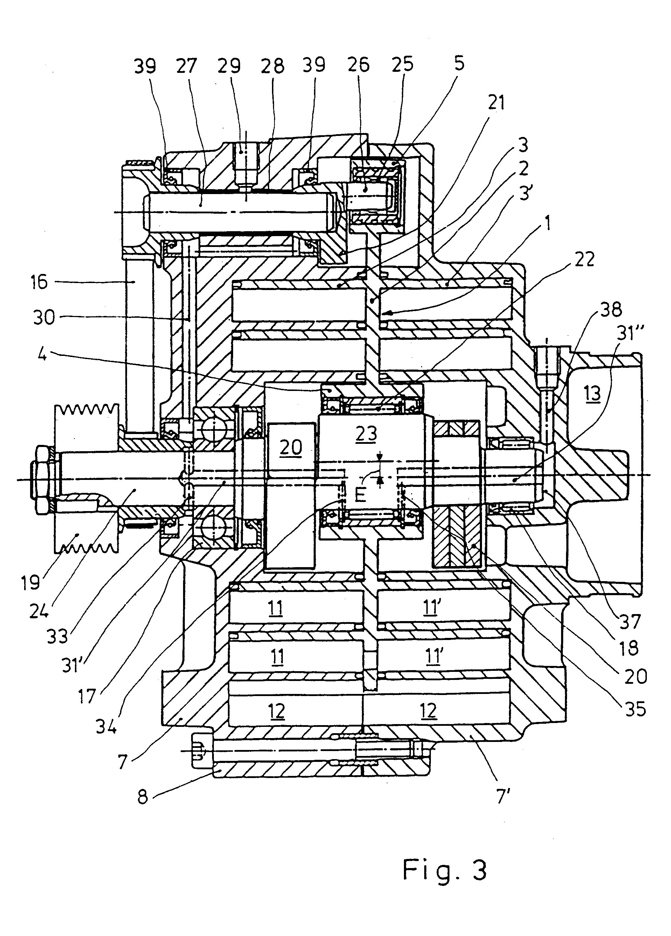

Ein Anwendungsbeispiel wird anhand der in Fig.3 dargestellten Verdrängermaschine beschrieben:
Zwecks Erläuterung der Funktionsweise dieses Verdichters, welche nicht Gegenstand der Erfindung ist, wird beispielsweise auf die DE-C3-2 603 462 verwiesen. Nachstehend wird nur der für das Verständnis der Erfindung notwendige Maschinenaufbau und Prozessablauf kurz beschrieben.

Mit 1 ist der Läufer der Maschine insgesamt bezeichnet. An beiden Seiten der Scheibe 2 sind je zwei, um 180° zueinander versetzte, spiralförmig verlaufende Verdrängerköper angeordnet. Es handelt sich um Leisten 3,3', die senkrecht auf der Scheibe 2 gehalten sind. Die Spiralen selbst sind in der Regel aus mehreren, aneinander anschliessenden Kreisbögen gebildet. Mit 4 ist die Nabe bezeichnet, mit welcher die Scheibe 2 auf einem Wälzlager 22 aufgezogen ist. Das Lager selbst sitzt auf einer Exzenterscheibe 23, die ihrerseits Teil der Antriebswelle 24 ist. Mit 5 ist ein radial ausserhalb der Leisten 3,3' angeordnetes Auge bezeichnet für die Aufnahme eines Führungslagers 25, welches auf einem Exzenterbolzen 26 aufgezogen ist. Dieser ist seinerseits Teil einer Führungswelle 27.

Das Maschinengehäuse besteht aus zwei zusammengesetzten, über Befestigungsaugen 8 zur Aufnahme von Verschraubungen miteinander verbundenen Hälften 7,7'. 11 und 11' bezeichnen die zwei jeweils um 180° gegeneinander versetzten Förderräume, die nach Art eines spiralförmigen Schlitzes in die beiden Gehäusehälften eingearbeitet sind. Sie verlaufen von je einem am äusseren Umfang der Spirale im Gehäuse angeordneten Einlass 12,12' zu einem im Gehäuseinneren vorgesehenen, beiden Förderräumen gemeinsamen Auslass 13. Sie weisen im wesentlichen parallele, in gleichbleibendem Abstand zueinander angeordnete Zylinderwände auf, die wie die Verdrängerkörper der Scheibe 2 eine Spirale von ca. 360° oder mehr umfassen. Zwischen diesen Zylinderwänden greifen die Verdrängerkörper 3,3' ein, deren Krümmung so bemessen ist, dass die Leisten die inneren und die äusseren Zylinderwände des Gehäuses an mehreren, beispielsweise an jeweils zwei Stellen nahezu berühren.

Den Antrieb und die Führung des Läufers 1 besorgen die zwei beabstandeten Exzenteranordnungen 23,24 resp. 26,27. Die Antriebswelle 24 ist in den Wälzlagern 17 und 18 gelagert und an ihrem aus der Gehäusehalfte 7 herausragenden Ende mit einer Keilriemenscheibe 19 für den Antrieb versehen. Auf der Antriebswelle 24 sind die Gegengewichte 20 angeordnet zum Ausgleich der beim exzentrischen Antrieb des Läufers entstehenden Massenkräfte. Eine derartige Ausgleichsmasse 21 ist ebenfalls auf der Führungswelle 27 angebracht. Diese Führungswelle ist innerhalb der Gehäusehälfte 7 in ein Gleitlager 28 eingelegt, welches beidseitig mit Ringdichtungen 39 abgedichtet ist.

Um in den Totpunktlagen eine eindeutige Führung des Läufers zu erzielen, werden die beiden Exzenteranordnungen über einen Zahniemenantrieb 16 winkelgenau synchronisiert. Dieser Doppelexzenterantrieb sorgt dafür, dass alle Punkte der Läuferscheibe und damit auch alle Punkte der beiden Leisten 3 und 3' eine kreisförmige Verschiebebewegung ausführen. Infolge der mehrfachen abwechselnden Annäherungen der Leisten 3,3' an die inneren und äusseren Zylinderwände der zugeordneten Förderkammern ergeben sich auf beiden Seiten der Leisten sichelförmige, das Arbeitsmedium einschliessende Arbeitsräume, die während des Antriebs der Läuferscheibe durch die Förderkammern in Richtung auf den Auslass verschoben werden. Hierbei verringern sich die Volumina dieser Arbeitsräume und der Druck des Arbeitsmittels wird entsprechend erhöht.

Zur Schmierung der in dem Gehäuse 7, 7' untergebrachten Lager sowie des Hauptexzenterlagers 22 ist ein gemeinsames System vorgesehen. Aus einer nicht dargestellten Schmiermittelquelle wird Schmiermittel, vorzugsweise Oel, über eine Bohrung 29 in der Gehäusehälfte 7 zum Gleitlager 28 geleitet. Beidseits dieses Lagers wird das Oel aufgefangen und über eine Bohrung 30 in den Bereich der Antriebswelle 24 geführt. Dort wird ein Teil des Oels zur Schmierung des Wälzlagers 17 herangezogen. Ueber den Pfad 33, 31', 34, 35, 31'', 37, 38 werden das Hauptexzenterlager 22 und das Wälzlager 18 geschmiert und das Schmiermittel aus der Gehäusehälfte 7' herausgeführt.

Die beidseitig der Exzenterscheibe 23 auf der Welle 24 angeordneten Gegengewichte 20 bestehen aus jeweils drei gestanzten Teilen, die auf die Welle aufgepresst sind.

Gemäss der Darstellung in Fig. 1 bilden die Zentren der Radien der beiden Kreisbögen mit der Rotationsachse 42 und der Exzenterachse 41 eine geometrische Längsebene 45 (schraffiert), in der die Schwerpunkte der Gegengewichte 20 und der Exzenterscheibe 23 mitsamt des Verdrängers (1 bis 4 in Fig. 3) liegen.

Selbstverständlich ist die Erfindung nicht auf die gezeigten und beschriebenen Beispiele beschränkt. So könnte beispielsweise auch die Führungswelle 27 in Fig.3 mit ihrer Ausgleichsmasse 31 mit der neuen Massnahme ausgerüstet sein.

## Patentansprüche

1. Exzenterwelle mit mindestens einem Gegengewicht (20), welches als separates Teil auf der Welle (24) angeordnet ist, wobei der Sitz (40) für das Gegengewicht auf der Welle einen durch zwei Kreisbögen (43,44) begrenzten zitronenförmigen Querschnitt aufweist, und wobei der eine, dem Exzenter (23) diametral gegenüberliegende Kreisbogen (43) sein Zentrum auf der Exzenterachse (41) hat, während der andere Kreisbogen (44) sein Zentrum auf der Rotationsachse (42) der Welle (24) hat,
dadurch gekennzeichnet
- dass der Querschnitt des Sitzes (40) grösser bemessen ist als der Querschnitt der Welle (24),
- dass das Gegengewicht (20) mit einer Aussparung versehen ist, deren Querschnitt jenem des Sitzes (40) entspricht, so dass die Einhaltung der Winkellage des Gegengewichtes (20) gegenüber der Welle (24) ausschliesslich über Formschluss erfolgt.
- und dass die Radien der den zitronenförmigen Querschnitt begrenzenden Kreisbögen unterschiedlich sind.

2. Exzenterwelle nach Anspruch 1, dadurch gekennzeichnet, dass der dem Exzenter (23) gegenüberliegende Kreisbogen (43) einen Radius (r_{E}) aufweist, der sich aus dem Radius (R_{W}) der Welle (24) und der Exzentrizität (E) des Exzenters (23) zusammensetzt.

3. Verwendung der Exzenterwelle nach Anspruch 1 oder 2 als Antriebswelle (24) einer Verdrängermaschine für kompressible Medien mit wenigstens einem in einem feststehenden Gehäuse (7, 7') angeordneten, nach Art eines spiralförmig verlaufenden Schlitzes ausgebildeten Förderraum (11, 11') und mit einem dem Förderraum zugeordneten, ebenfalls spiralförmig ausgebildeten Verdrängerkörper (1-4), der auf einem gegenüber dem Gehäuse exzentrisch angetriebenen scheibenförmigen Läufer (1) gehalten ist.

## Claims

1. Eccentric shaft having at least one counterweight (20) which is arranged on the shaft (24) as a separate part, the seat (40) for the counterweight on the shaft exhibiting a lemon-shaped cross-section bounded by two circular arcs (43, 44), and one circular arc (43) which is diametrically opposite the eccentric (23) having its centre on the eccentric axis (41) and the other circular arc (44) having its centre on the axis of rotation (42) of the shaft (24), characterised
- in that the cross-section of the seat (40) is dimensioned to be larger than the cross-section of the shaft (24),
- in that the counterweight (20) is provided with a recess, the cross-section of which corresponds to that of the seat (40), so that the angular position of the counterweight (20) with respect to the shaft (24) is maintained solely by positive locking,
- and in that the radii of the circular arcs bounding the lemon-shaped cross-section are different.

2. Eccentric shaft according to Claim 1, characterised in that the circular arc (43) which is opposite to the eccentric (23) has a radius (r_{E}) which is composed of the radius (R_{W}) of the shaft (24) and the eccentricity (E) of the eccentric (23).

3. Use of the eccentric shaft according to Claim 1 or 2 as drive shaft (24) of a displacement machine for compressible media having at least one delivery space (11, 11') which is arranged in a stationary housing (7, 7') and is constructed in the manner of a spirally extending slot and having a displacement body (1-4) which is associated with the delivery space, is also spirally constructed and is held on a disc-shaped rotor (1) which is driven eccentrically with respect to the housing.

## Revendications

1. Arbre d'excentrique avec au moins un contrepoids (20), qui est une pièce séparée disposée sur l'arbre (24), dans lequel le siège (40) prévu pour le contrepoids sur l'arbre présente une section transversale en forme de citron délimitée par deux arcs de cercle (43, 44) et dans lequel le premier arc de cercle (43) diamétralement opposé à l'excentrique (23) a son centre sur l'axe de l'excentrique (41) tandis que l'autre arc de cercle (44) a son centre sur l'axe de rotation (42) de l'arbre (24), caractérisé en ce que
- la section transversale du siège (40) est de plus grandes dimensions que la section transversale de l'arbre (24); en ce que
- le contrepoids (20) est pourvu d'un évidement dont la section transversale correspond à celle du siège (40), de telle sorte que le respect de la position angulaire du contrepoids (20) par rapport à l'arbre (24) est assuré exclusivement par une liaison de forme; et en ce que
- les rayons des arcs de cercle délimitant la section transversale en forme de citron sont différents.

2. Arbre d'excentrique suivant la revendication 1, caractérisé en ce que l'arc de cercle (43) diamétralement opposé à l'excentrique (23) présente un rayon (r_{E}), qui se compose du rayon (R_{W}) de l'arbre (24) et de l'excentricité (E) de l'excentrique (23).

3. Utilisation de l'arbre d'excentrique suivant la revendication 1 ou 2 comme arbre moteur (24) d'une machine de déplacement pour des fluides compressibles, avec au moins une chambre de transport (11, 11') disposée dans un carter fixe (7, 7') et profilée à la manière d'une fente en forme de spirale, et avec un corps de déplacement (1 - 4) également profilé en forme de spirale et associé à la chambre de transport, qui est maintenu sur un rotor (1) en forme de disque excentriquement entraîné par rapport au carter.
